# EUROPEAN PATENT APPLICATION

(11) **EP 2 562 847 A1**
(43) Date of publication of application: **27.02.2013**
(21) Application number: 12177406.1
(22) Date of filing: 21.07.2012
(51) Int. Cl.: H01M 2/22, H01M 2/26, H01M 2/04, H01M 2/12, H01M 10/0525

(54) **Power storage device**

(30) Priority: 22.08.2011 TW 100215630
(71) Applicant: Chang Hong Energy Technology Co., Ltd., Taichung City 40869 (TW)
(72) Inventor: Pei, Hsiu-Hsiang, 804 Kaohsiung City (TW); Su, Yen-Teng, 701 Tainan City (TW); Tsai, Kun-Miao, 710 Tainan City (TW); Chiu, Yao-Min, 811 Kaohsiung City (TW); Chen, Jesse, 807 Kaohsiung City (TW); Lin, Chih-Jung, 709 Tainan City (TW)
(74) Representative: Lang, Christian

(57) **Abstract**

A power storage device (20) is provided with an upper cover (201), a cell module (202) and a lower cover (203). A tab (2022) is locally formed at each of two sides of the cell module (202). When welded with an electrical connection part (2023) of an electrode (204), the tab (2022) merely needs to be placed horizontally or be slightly at an inclination angle, and one-time bending is performed. Therefore cracks to a plasticized metal protective film wrapped on the outer edge of the tab or to the tab itself are limited because multiple bending is avoided.

## Description

### BACKGROUND OF THE INVENTION

### Field of Invention

The present invention relates to a power storage device, and more particularly to a power storage device in which a tab joint portion is locally formed at a side of a cell module to be welded and assembled with a tab and an electrical connection part is formed on the tab.

### Related Art

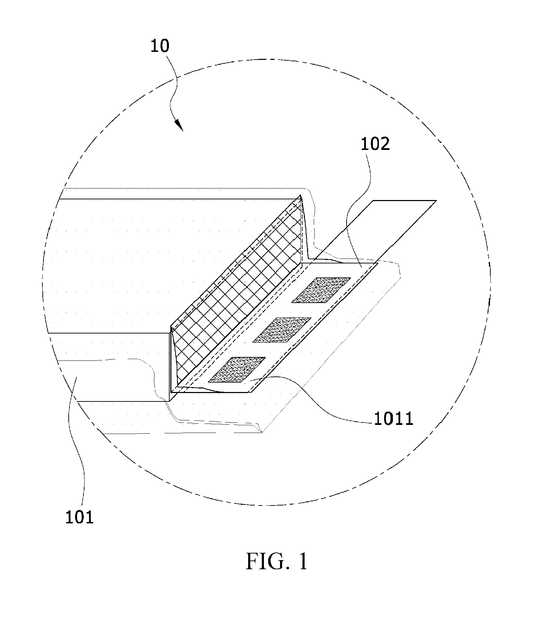

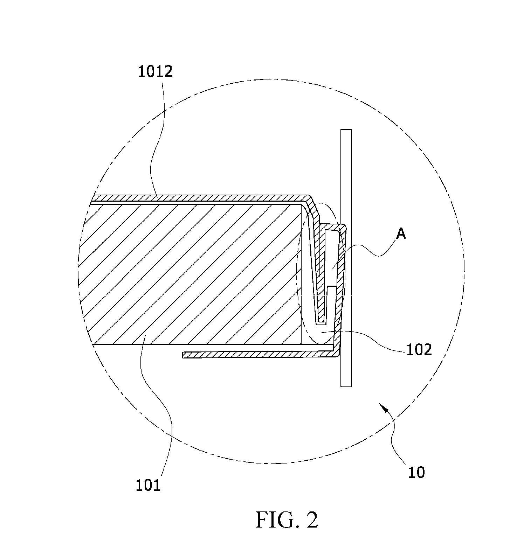

An existing lithium battery can be used as a power source with high power consumption. Taking a non-aqueous electrolyte secondary lithium battery as an example, it can provide larger power supply quantity and power reserve quantity. However, in the process of manufacturing a lithium battery, when a tab structure and an electrode structure thereof are jointed, a plasticized metal protective film wrapped on the outer edge is very easy to crack to cause leakage. FIG. 1 is a schematic component view of a cell module and a tab in the prior art. As shown in FIG 1, a power storage device 10 in the prior art is mainly provided with a cell module 101 and an electrode (not shown in FIG 1). The cell module 101 is provided with a structure of a positive active layer and a negative active layer. After the active layers in the cell module 101 are jointed, a tab position 1011 is formed through extension of a lateral edge of the cell module 101 to be welded and assembled with a tab 102. During implementation, the tab position 1011 and the tab 102 are jointed by welding. FIG. 2 is a schematic view of implementation of a cell module and a tab in the prior art. As described above, the welded tab 102 needs to be bent many times, so as to reduce the volume after the manufacturing, as A shown in FIG 2. Again, the tab 102 bent many times is very easy to crack, and after the cell module 101 is welded with the tab 102, a plasticized metal protective film 1012 wrapped on the outer edge of the cell module 101 also cracks easily because of many times of bending operations, so as to affect the protective effect. Again, the existing power storage device 10 is mainly characterized by a whole tab structure, so in the manufacturing process, electrolyte cannot seep into the cell module 101 quickly. Besides, tab materials used in the whole tab structure are relatively large in quantity so the manufacturing cost is increased. Therefore, if the structure of the power storage device in the prior art can be improved moderately, the yield of whole manufactured products thereof can definitely be improved.

### SUMMARY OF THE INVENTION

In view of the above problems, the present invention is mainly directed to a power storage device which can improve the situation that a plasticized metal protective film wrapped on the outer edge and a tab are easy to crack in the process of jointing a tab structure and an electrode structure in the prior art.

In order to achieve the above objective, the power storage device of the present invention is mainly **characterized in that** a tab joint portion is locally formed at each of the two sides of the cell module to be welded with a tab; when the welding of the tab joint portion and the tab is completed, the tab merely needs to be placed horizontally or slightly inclined, and one-time bending is performed on an electrical connection part formed by the tab, so as to be electrically connected to one of electrodes of an upper cover. Therefore, the situation that the tab needs to be bent many times to be electrically connected to the electrode can be avoided and the situation that the plasticized metal protective film is easy to crack can be improved.

### BRIEF DESCRIPTION OF THE DRAWINGS

The present invention will become more fully understood from the detailed description given herein below for illustration only, and thus are not limitative of the present invention, and wherein:
FIG. 1 is a schematic component view of a cell module and a tab in the prior art;
FIG. 2 is a schematic view of implementation of the cell module and the tab in the prior art;
FIG. 3 is a schematic view (1) of components of the present invention;
FIG. 4 is a schematic view (2) of components of the present invention;
FIG. 5 is a schematic view of combination of the present invention;
FIG. 6 is a schematic view of completed combination of the present invention;
FIG. 7 shows another embodiment (1) of the present invention;
FIG. 8 shows another embodiment (2) of the present invention;
FIG. 9 shows another embodiment (3) of the present invention; and
FIG. 10 shows another embodiment (4) of the present invention.

### DETAILED DESCRIPTION OF THE INVENTION

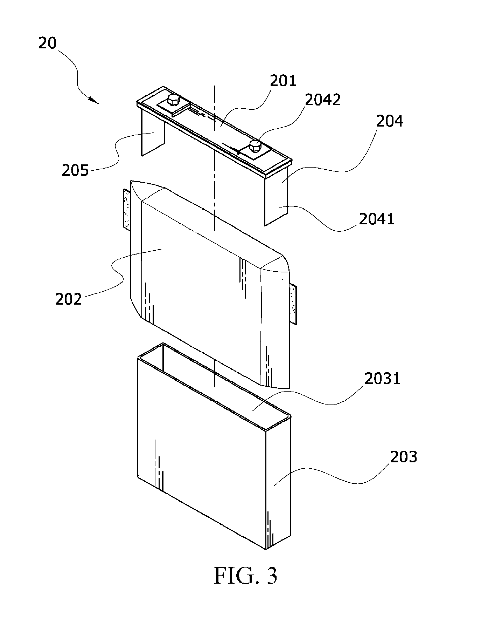

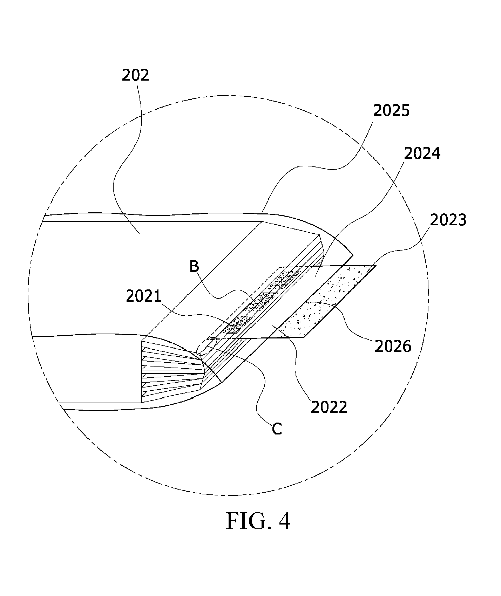

FIG. 3 is a schematic view (1) of components of the present invention. Referring to FIG. 3, a power storage device 20 of the present invention includes an upper cover 201, a cell module 202 and a lower cover 203. The upper cover 201 is formed with a first electrode 204 and a second electrode 205. The first electrode 204 is formed with a bridging part 2041, so as to be electrically connected to the cell module 202. An electrical connection part 2042 is formed through extension of an opposite end of the bridging part 2041, so as to be electrically connected to an exterior electronic unit. Again, the structure of the second electrode 205 is the same as that of the first electrode 204. Accordingly, the power storage device 20 can perform charging and discharging operations through the two electrodes (204, 205). Again, the lower cover 203 is formed with a containing space 2031, in which the cell module 202 can be placed. When assembly of the upper and lower covers (201, 203) is completed, the containing space 2031 is closed. FIG. 4 is a schematic view (2) of components of the present invention. As described above, the cell module 202 is provided with functions of charging and discharging, and is internally provided with a power storage and supply structure of more than one positive active layer and more than one negative active layer. The active layers are separately jointed with two ends of the cell module 202, and are further locally formed with a tab joint portion 2021 separately, so as to be jointed and assembled with a tab 2022. Again, the position where the locally formed tab joint portion 2021 is relatively not formed can form a seepage path when the cell module 202 performs an electrolyte seeping operation between electrode plates, so as to make the electrolyte quickly seep into a position between a positive active layer and a negative active layer, thereby simplifying the manufacturing process, as C shown in FIG 4. Again, when the tab 2022 tends to be jointed with the tab joint portion 2021, the tab 2022 is stuck on the surface of the tab joint portion 2021, so that the tab 2022 is in contact with a generating face of the tab joint portion 2021, and by means of ultrasonic welding (or high-frequency welding), the tab 2022 is welded with the tab joint portion 2021. The completion of the welding is like B shown in FIG 4, which is an example of local welding, but the present invention is not limited to this. Again, an electrical connection part 2023 is formed through extension of one end of the tab 2022. The electrical connection part 2023 is used to connect with one of the electrodes (204 or 205) of the upper cover 201. Again, in the present invention, an isolation portion 2024 is further formed between the tab joint portion 2021 and the electrical connection part 2023. A plasticized metal protective film 2025 is wrapped on the outer edge of the cell module 202 of the present invention. The plasticized metal protective film 2025 provides a protective function.

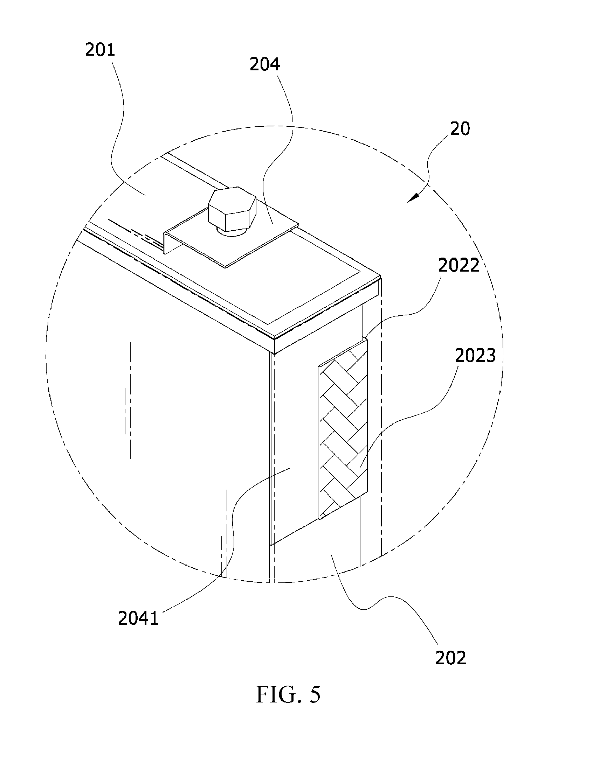

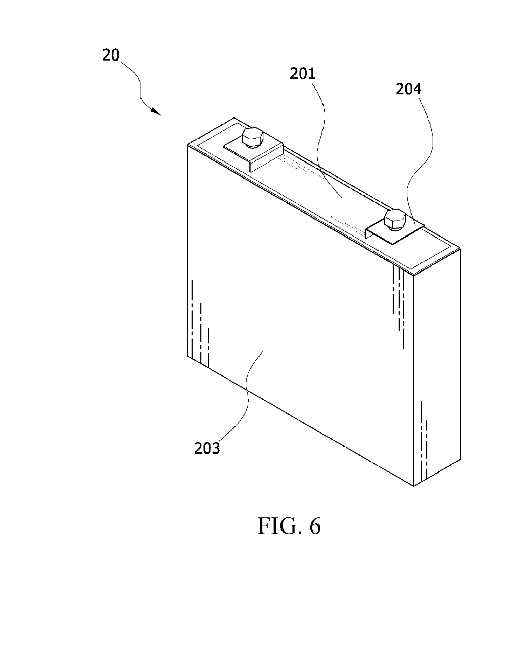

FIG. 5 is a schematic view of combination of the present invention. When the power storage device 20 is assembled, the two electrodes (204, 205) of the cell module 202 and the upper cover 201 need to be electrically connected. As shown in FIG 5, the tab 2022 is in a horizontal shape and one-time bending is performed on an electrical connection part 2023 on the tab 2022, so that the surface of the electrical connection part 2023 can be stuck on the surface of the bridging part 2041 of the first electrode 204, and the electrical connection part 2023 is electrically connected to the first electrode 204 by means of jointing. Therefore, the cell module 202 can charge and discharge with the exterior electronic unit through the first electrode 204. The tab 2022 merely needs to perform one-time bending on the electrical connection part 2023, so as to greatly improve the situation that the tab 2022 is easy to crack. Again, the assembling way of the second electrode 205 and the cell module 202 is the same as that of the first electrode 204 and the cell module 202. Referring to FIG. 1, after the tab 2022 of the cell module 202 is electrically connected to the two electrodes (204, 205) of the upper cover 201, the assembled components are placed in the containing space 2031 of the lower cover 203, and then the upper and lower covers (201, 203) are assembled, so that the containing space 2031 is closed to complete the assembling of the power storage device 20. The shape of the completion of the assembling is as shown in FIG. 6, which is a schematic view of the completion of the combination of the present invention.

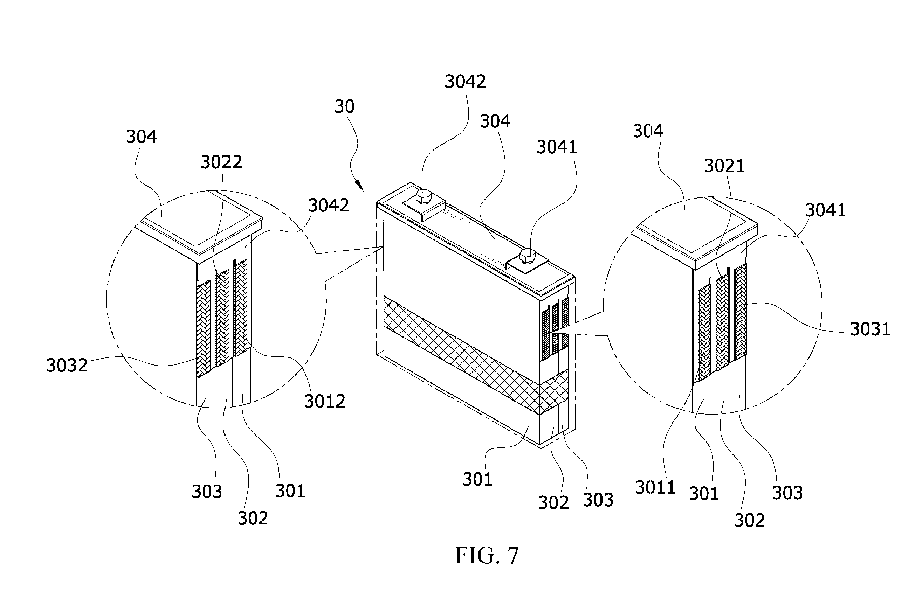

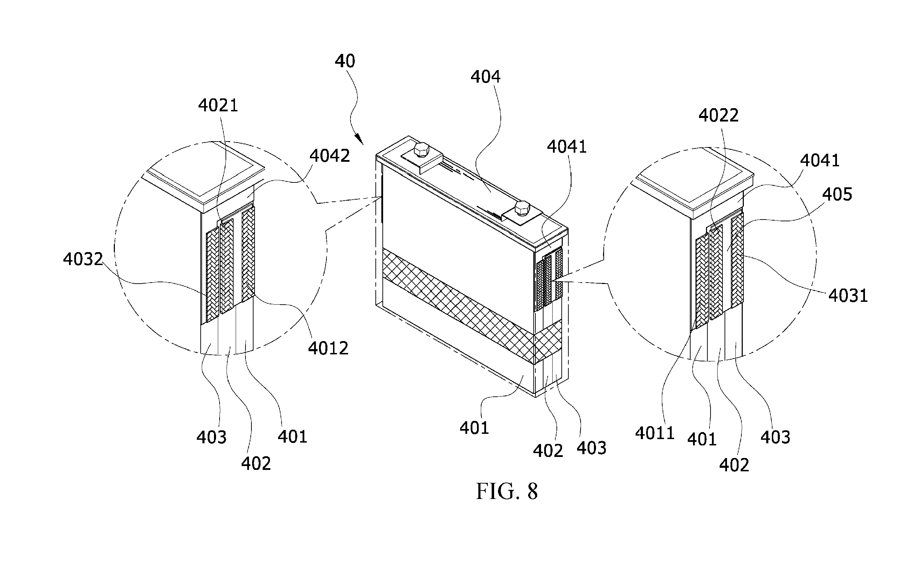

FIG. 7 shows another embodiment (1) of the present invention. A plurality of cell modules 202 can be stacked inside the power storage device 20 according to the power supply quantity or design requirement, so as to obtain a larger current output or larger voltage output. As shown in FIG 7, the power storage device 30 is provided with a first cell module 301, a second cell module 302 and a third cell module 303. The tabs (3011, 3021, 3031) of the cell modules (301, 302, 303) are electrically connected to a first electrode 3041 of the upper cover 304 respectively, and the other tabs (3012, 3022, 3032) of the cell modules (301, 302, 303) are electrically connected to a second electrode 3042 respectively. Therefore, the cell modules (301, 302, 303) are connected in parallel. Again, the way in which the above tabs are electrically connected to an electrode is merely an example and the present invention is not limited to this. FIG. 8 shows another embodiment (2) of the present invention. As shown in FIG 8, the present invention can also be stacked in series connection so as to conform to requirements of different circuit designs. As shown in FIG 8, the power storage device 40 of the embodiment is provided with a first cell module 401, a second cell module 402 and a third cell module 403, which are electrically connected as follows:
"The first electrode 4041 → a tab 4011 of the first cell module 401 → another tab 4012 of the first cell module 401 → a tab 4021 of the second cell module 402 → another tab 4022 of the second cell module 402 → a tab 4031 of the third cell module 403 → another tab 4032 of the third cell module 403 → the second electrode 404". Therefore, the cell modules (401, 402, 403) are connected in series. Again, when the tabs (such as 4012, 4021) of two of the cell modules (such as 401, 402) tend to be electrically connected, the two tabs (4012, 4021) can be directly electrically connected, or be connected through a bridging part (as 405 shown in FIG 8). Again, in the above two embodiments, three cell modules are merely taken as an example, and during manufacturing, the quantity of the cell modules can be adjusted according to requirements.

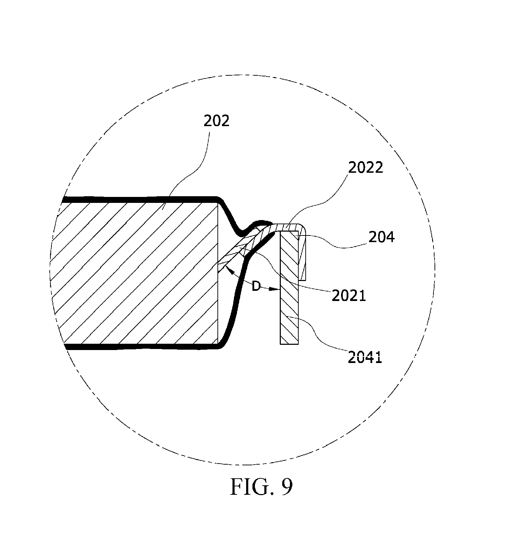

FIG. 9 shows another embodiment (3) of the present invention. To reduce the volume of the power storage device 20 after manufacturing in the present invention moderately, in the present invention, a tail end of the tab 2022 is slightly bent to form an inclination angle (as D shown in FIG 9) when the tab 2022 is jointed with the first electrode 204 (or the second electrode). Therefore, the volume obtained after the tab 2022 is jointed with the first electrode 204 can be reduced.

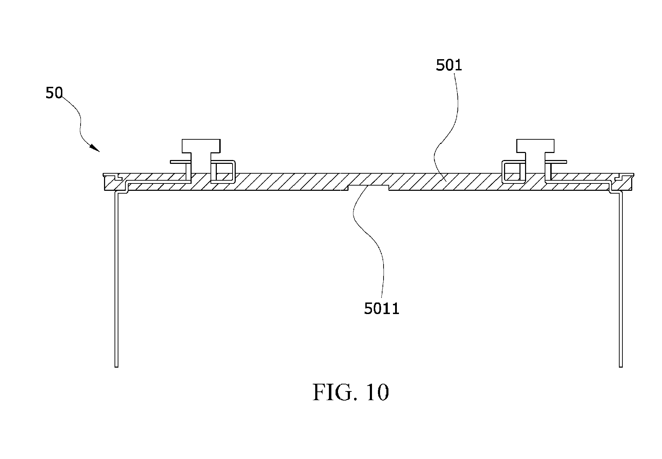

FIG.10 shows another embodiment (4) of the present invention. As shown in FIG 10, for the power storage device 50, the upper cover 501 is further formed with a pressure relief part 5011. The profile thickness of the formed pressure relief part 5011 is smaller than those of other parts of the upper cover 501. Therefore, when the interior pressure of the power storage device 50 reaches a certain value, the pressure relief part 5011 cracks, so that the interior pressure can be exhausted to promote the use safety of the power storage device 50.

To sum up, in the power storage device of the present invention, when the tab is electrically connected to the electrode of the upper cover, the tab merely needs to be placed horizontally or be slightly inclined at an appropriate angle, one-time bending is performed on the electrical connection part of the tab, and the electrical connection can be completed. Accordingly, after implementation, the present invention can actually provide a power storage device that can improve the situation that crack occurs easily in the process of jointing the tab structure and the electrode structure in the prior art.

The above descriptions are merely preferred embodiments of the present invention, but are not intended to limit the present invention. Any equivalent variation and modification made by persons skilled in the art without departing from the spirit and scope of the present invention shall fall within the appended claims of the present invention.

## Claims

1. A power storage device, comprising:
an upper cover, provided with an electrode;
a lower cover, formed with a containing space, wherein after the lower cover is assembled with the upper cover, the containing space is closed; and
a cell module, assembled in the containing space, wherein a lateral edge of the cell module is provided with a tab joint portion to be jointed with a tab, and an electrical connection part is formed through extension of one end of the tab; and
after one-time bending is performed on the electrical connection part of the tab, the electrical connection part is stuck on the electrode to form an electrical connection.

2. The power storage device according to claim 1, wherein the upper cover is provided with a first electrode and a second electrode.

3. The power storage device according to claim 1, wherein the electrode is provided with a bridging part and one end of the bridging part is provided with an electrical connection part.

4. The power storage device according to claim 1, wherein the upper cover is provided with a pressure relief part.

5. The power storage device according to claim 1, wherein the size of the containing space is changeable.

6. The power storage device according to claim 1, wherein the power storage device is provided with cell modules in number more than one.

7. The power storage device according to claim 6, wherein the cell modules are connected in parallel.

8. The power storage device according to claim 6, wherein the cell modules are connected in series.

9. The power storage device according to claim 2, wherein when assembled with the first electrode and the second electrode, the tab is at an inclination angle.
